# EUROPÄISCHE PATENTSCHRIFT

(11) **EP 2 145 845 B1**
(45) Veröffentlichungstag und Bekanntmachung des Hinweises auf die Patenterteilung: **08.02.2012**
(21) Anmeldenummer: 09159301.2
(22) Anmeldetag: 04.05.2009
(51) Int. Cl.: B65G 49/04, C23C 2/00, F16C 33/04

(54) **Tauchbadrolle und Verfahren zum Herstellen einer Tauchbadrolle**
Submersible bath roller and method for producing same
Rouleau de bain submersible et procédé de fabrication d'un rouleau de bain submersible

(30) Priorität: 14.07.2008 EP 08160351
(43) Veröffentlichungstag der Anmeldung: 20.01.2010
(73) Patentinhaber: Sulzer Metco Coatings GmbH, 38223 Salzgitter (DE)
(72) Erfinder: Gnoyke, Karsten, 28876 Oyten (DE); Döding, Christian, 38274 Elbe (DE); Jansen, Franz, 52499 Baesweiler (DE)
(74) Vertreter: Sulzer Management AG

(56) Entgegenhaltungen:
- DE-A1- 19 511 943
- US-A- 5 711 613
- US-A- 5 718 519

## Beschreibung

Die Erfindung betrifft eine Tauchbadrolle für ein Tauchbad mit flüssigem Metall sowie ein Verfahren zur Herstellung einer Tauchbadrolle gemäss dem Oberbegriff des unabhängigen Anspruchs der jeweiligen Kategorie.

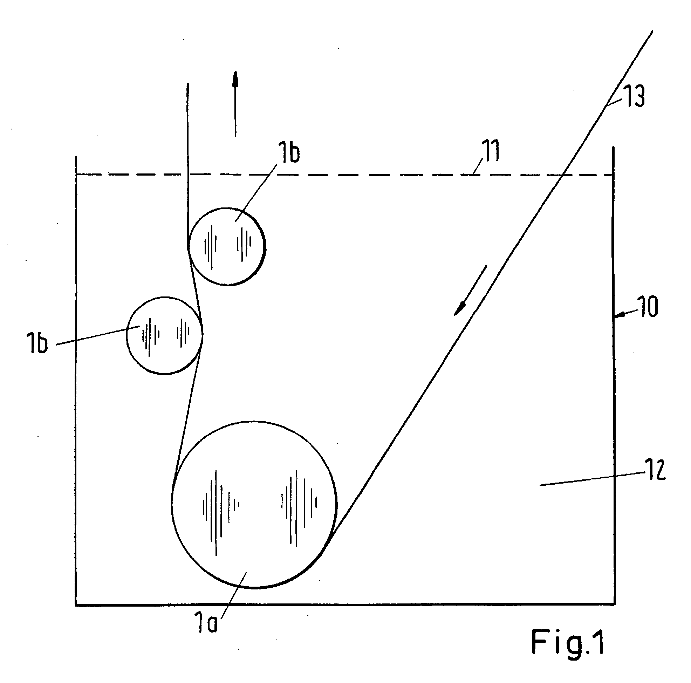

Zur metallischen Beschichtung von bandförmigen Materialien, beispielsweise Blechen oder sonstigen Werkstücken in der Stahlindustrie, ist es bekannt, diese durch ein Tauchbad mit flüssigem Metall zu ziehen, um so die Beschichtung zu erreichen. Beispiele hierfür sind die Aluminisierung oder die Verzinkung von Blechen, die auch als Feueraluminieren bzw. Feuerverzinken bezeichnet werden. Hierbei wird das zu beschichtende Blech (siehe Fig. 1), welches in Form eines Bandes vorliegt durch ein Gefäss gezogen, in welchem das gewünschte Material - also beispielsweise Aluminium oder Zink, in geschmolzener Form enthalten ist. Zur Führung des Bandes sind typischerweise mehrere Rollen vorgesehen, die vollständig in dem geschmolzenen Metall untergetaucht sind. Man unterscheidet üblicherweise zwischen den Bodenrollen (pot rolls), mit welchen das Band umgelenkt wird, und den Stabilisatorrollen (support rolls), welche den Bandlauf stabilisieren.

Im Folgenden werden sowohl die Stabilisatorrollen als auch die Bodenrollen mit dem Oberbegriff Tauchbadrollen zusammengefasst.

Die Lagerung der Tauchbadrollen beim Feueraluminieren oder Verzinken stellt aufgrund der Aggressivität der flüssigen Metalle ein grosses Problem dar. Beim Feueraluminieren greift insbesondere das Aluminium oder die Aluminium-Silizium-Schmelze die mechanischen Lager der Tauchbadrollen an.

Häufig sind die Lagerzapfen, die als massive Zapfen ausgestaltet sein können oder als Kern mit einer darauf angeordneten Buchse, aus Stelliten gefertigt. Die Gegenlaufpartner der Lagerzapfen sind sind üblicherweise auch aus Stelliten oder aus Keramik hergestellt.

Aufgrund des tribokorrosiven Angriffs der flüssigen Metallschmelze, also die Kombination des korrosiven Angriffs mit der Reibwirkung zwischen den Gegenlaufpartnern der Lagerung, unterliegen die Lagerzapfen einem enorm hohen Verschleiss. Bei der kontinuierlichen Bandaluminisierung haben die Lagerzapfen bzw. die Buchsen lediglich eine Standzeit von maximal 3-5 Tagen. Danach sind so starke metallurgische Auflösungen und reibungsbedingte Degradationen der Lagerzapfen vorhanden, dass die Tauchbadrollen ausgetauscht werden müssen.

Ausgehend von diesem Stand der Technik ist es daher eine Aufgabe der Erfindung, eine Tauchbadrolle vorzuschlagen, mit der swich in metallischen Tauchbädern, speziell Aluminium- und Zinkbädern, deutlich höhere Standzeiten erzielen lassen. Ferner ist es eine Aufgabe der Erfindung, ein entsprechendes Verfahren zur Herstellung solcher Tauchbadrollen vorzuschlagen.

Die diese Aufgabe lösenden Gegenstände der Erfindung sind durch die unabhängigen Ansprüche der jeweiligen Kategorie gekennzeichnet.

Erfindungsgemäss wird also eine Tauchbadrolle vorgeschlagen für ein Tauchbad mit flüssigem Metall mit einem Rollenkörper, der sich entlang einer Längsachse erstreckt, sowie mit im Wesentlichen zylindrischen Lagerzapfen zum Zusammenwirken mit Lagerbuchsen zwecks Lagerung der Tauchbadrolle wobei jeder Lagerzapfen mindestens eine Nut aufweist, die sich in Umfangsrichtung über den gesamten Umfang des Lagerzapfens erstreckt, und die mittels einer durch thermisches Spritzen erzeugten Schutzschicht aufgefüllt ist.

Es hat sich gezeigt, dass durch diese in der Nut vorgesehene Schutzschicht eine deutlich bessere Resistenz sowohl gegen den tribologisch bedingten Verschleiss als auch gegen den korrosiven Angriff des flüssigen Metalls, insbesondere des flüssigen Aluminiums oder Zinks erzielen lässt.

Vorzugsweise enthält die Schutzschicht Molybdän, Molybdänkarbid (Mo₂C, MoC) oder ein Gemisch aus Molybdän und Molybdänkarbid (Mo₂C, MoC). Mit diesen Materialien lässt sich eine besonders grosse Verlängerung der Standzeit der Tauchbadrollen erzielen. Insbesondere ist es bevorzugt, wenn der Molybdängehalt oder der Molybdänkarbidgehalt oder der Gehalt an dem Gemisch aus Molybdän und Molybdänkarbid der Schutzschicht mindestens 40 Gewichtsprozent beträgt.

Gemäss einer bevorzugten Ausführungsform sind an jedem Lagerzapfen mehrere Nuten vorgesehen, wobei benachbarte Nuten jeweils durch einen Steg getrennt sind. Die Stege verleihen dabei den Lagerzapfen die nötige mechanische Stabilität.

In der Praxis haben sich die folgenden Massnahmen als vorteilhaft erwiesen:
- Für jeden Lagerzapfen bilden die Stege mindestens 30 Prozent der Oberfläche des Lagerzapfens
- jeder Steg weist eine Breite von 3 mm bis 15 mm auf
- jede Nut weist eine Breite von 3 mm bis 20 mm auf
- jede Nut weist eine Tiefe von mindestens fünfzig Mikrometer und besonders bevorzugt eine Tiefe von 100 bis 200 Mikrometer.

Eine weitere vorteilhafte Massnahme besteht darin, dass die Schutzschicht zusätzlich auf den Stegen vorgesehen ist, wobei die Schutzschicht auf der Oberfläche der Stege eine Dicke von mindestens zwanzig Mikrometer und vorzugsweise von 50 bis 100 Mikrometer aufweist. Durch diese Massnahme lässt sich auch die Oberfläche der Stege effizient schützen.

Durch die Erfindung wird ferner ein Verfahren zur Herstellung einer Tauchbadrolle vorgeschlagen für ein Tauchbad mit flüssigem Metall mit einem Rollenkörper, der sich entlang einer Längsachse erstreckt, sowie mit im Wesentlichen zylindrischen Lagerzapfen zum Zusammenwirken mit Lagerbuchsen, wobei in jedem Lagerzapfen zumindest eine Nut vorgesehen wird, die sich in Umfangsrichtung über den gesamten Umfang des Lagerzapfens erstreckt, wobei die Nut mittels einer durch thermisches Spritzen erzeugten Schutzschicht aufgefüllt wird.

Vorzugsweise wird die Nut mit einem molybdänhaltigen oder mit einem molybdänkarbidhaltigen Material aufgefüllt.

Insbesondere ist es vorteilhaft, die Nut mittels Plasmaspritzen, Flammspritzen oder Lichtbogenspritzen aufzufüllen.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1: einen schematische Darstellung eines Tauchbads zum Beschichten mit einem flüssigen Metall,
- Fig. 2: eine schematische Darstellung eines Ausführungsbeispiels einer erfindungsgemässen Tauchbadrolle,
- Fig. 3: einen Schnitt durch einen Lagerzapfen eines Ausführungsbeispiels einer erfindungsgemässen Tauchbadrolle, und
- Fig.4: eine Variante für das Ausführungsbeispiel aus Fig. 3.

Fig. 1 zeigt in einer schematischen Darstellung ein Tauchbad zur Beschichtung von Metallbändern, speziell Stahlbändern, mit einem Metall. Im Folgenden wird auf das für die Praxis besonders wichtige Ausführungsbeispiel Bezug genommen, dass die Beschichtung mit Aluminium erfolgen soll. Es versteht sich jedoch, dass die Erfindung nicht auf solche Anwendungen beschränkt ist, sondern auch für andere Metalle oder Legierungen Verwendung finden kann, beispielsweise für das Verzinken.

Das Tauchbad umfasst einen Behälter 10, der bis zu einer Niveaulinie 11 mit flüssigem Aluminium 12 gefüllt ist. In dem Behälter sind eine Bodenrolle 1 a sowie zwei Stabilisatorrollen 1 b vorgesehen. Da die Erfindung sowohl für die Bodenrolle 1 a als auch für die Stabilisatorrollen 1 b Verwendung finden kann, wird im Folgenden als Oberbegriff auch "Tauchbadrolle 1" verwendet, womit dann die Bodenrolle 1a und/oder die Stabilisatorrolle 1 b, bzw. die Stabilisatorrollen 1 b gemeint sind.

Das zu beschichtende Metallband 13, insbesondere ein Stahlband, wird durch das flüssige Aluminium 12 bewegt, umläuft die Bodenrolle 1 a, wo es umgelenkt wird, passiert die beiden Stabilisatorrollen 1 b und verlässt dann den Behälter 10. Die Bewegung des Metallbands 13 ist in Fig. 1 durch die beiden Pfeile ohne Bezugszeichen dargestellt.

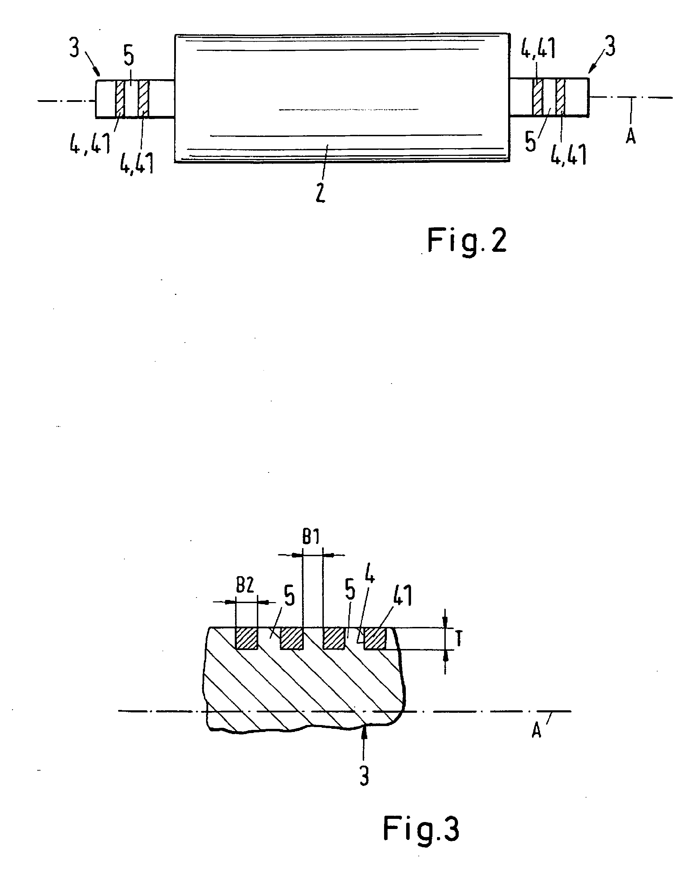

Fig. 2 zeigt in einer schematischen Darstellung ein Ausführungsbeispiel einer erfindungsgemässen Tauchbadrolle 1, die als Bodenrolle 1 a oder als Stabilisatorrolle 1 b ausgestaltet sein kann. Die Tauchbadrolle 1 hat eine allgemein zylindrische Gestalt mit einem Rollenkörper 2 der sich entlang einer Längsachse A erstreckt. An den beiden Grundflächen des zylindrischen Rollenkörpers 2 ist jeweils ein im Wesentlichen zylindrischer Lagerzapfen 3 vorgesehen, der sich jeweils konzentrisch zum Rollenkörper 2 in Richtung der Längsachse A erstreckt. Die Lagerzapfen wirken zusammen mit nicht dargestellten Lagerbuchsen, sodass die Tauchbadrolle 1 in dem Behälter 10 drehbar gelagert werden kann.

Der Lagerzapfen 3 kann entweder als massiver Zapfen ausgebildet sein, der einstückig mit dem Rollenkörper hergestellt ist, oder drehfest mit dem Rollenkörper 2 verbunden ist, beispielsweise durch Schweissen, oder der Lagerzapfen 3 umfasst einen zylindrischen Kern, auf den eine Buchse drehfest aufgesetzt ist.

Das Grundmaterial aus dem der Rollenkörper 2 bzw. die Lagerzapfen 3 bestehen, ist irgendein Material, was aus dem Stand der Technik für Tauchbadrollen hinreichen bekannt ist, beispielsweise der Stahl 100Cr6.

Erfindungsgemäss ist an jedem Lagerzapfen 3 mindestens eine Nut 4 vorgesehen, die sich entlang des gesamten Umfangs über die Mantelfläche des Lagerzapfen 3 erstreckt und so eine ringförmige Vertiefung in dem Lagerzapfen 3 bildet.

Fig. 3 zeigt in einer Schnittdarstellung ein Ausführungsbeispiels des Lagerzapfens 3. Bei diesem Ausführungsbeispiel sind insgesamt vier Nuten 4 vorgesehen, die jeweils durch Stege 5 voneinander getrennt sind.

Die Nuten 4 sind jeweils mit einer Schutzschicht 41 aufgefüllt, die vorzugsweise Molybdän oder Molybdänkarbid (Mo₂C, MoC) oder ein Gemisch aus Molybdän und Molybdankarbid enthält. Besonders bevorzugt ist dabei der Molybdängehalt bzw. der Molybdänkarbidgehalt (MoC, Mo₂C) in der Schutzschicht 41 oder der Gehalt an dem Gemisch von Molybdän und Molybdänkarbid in der Schutzschicht 41 mindestens 40 Gewichtsprozent.

Zur Herstellung der erfindungsgemässen Tauchbadrolle wird insbesondere so vorgegangen. Zunächst wird in an sich bekannter Weise der Rollenkörper 2 mit den Lagerzapfen 3 hergestellt. Anschliessend werden in einem materialabtragenden Bearbeitungsschritt, z.B. durch Fräsen, die Nuten 4 hergestellt. Diese werden dann in einem thermischen Spritzprozess, vorzugsweise Plasmaspritzen, Flammspritzen oder Lichtbogenspritzen, mit einer Schutzschicht aufgefüllt.

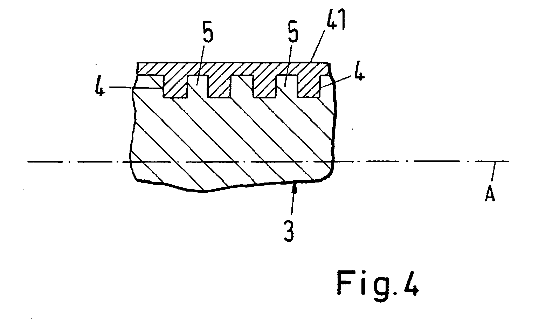

Im thermischen Spritzprozess können auch die Stege mit einer Beschichtung in einer Stärke von mindestens 20 µm, vorzugsweise 50 bis 100 µm beschichtet werden, sodass die Schutzschicht nicht nur die Nuten 4 auffüllt sondern auch die Oberfläche der Stege 5 schützt. Primäre Aufgabe der Stege 5 ist es, dem Lagerzapfen 3 die nötige Stabilität zu verleihen. Eine derartige Variante ist in Fig. 4 angedeutet.

Nach dem thermischen Spritzprozess wird die Beschichtung des Lagerzapfens 3 durch Schleifen bzw. Polieren egalisiert, sodass der Lagerzapfen 3 insgesamz eine glatte Oberfläche aufweist. Optional kann nach dem Schleifen noch ein an sich bekannter Versieglungsprozess durchgeführt werden. Dazu wird eine chromhaltige Glasur auf den Zapfen aufgetragen und anschliessend eingebrannt.

Mit der erfindungsgemässen Tauchbadrolle lassen sich im Aluminiumbad, das typischerweise eine Temperatur von 680°C aufweist, Standzeiten von bis zu 15 Tagen und mehr erzielen, wobei gleichzeitig ein wesentlich ruhigerer Lauf der Tauchbadrollen zu beobachten ist als bei Tauchbadrollen, die aus dem Stand der Technik bekannt sind.

In der Praxis hat es sich als besonders vorteilhaft erwiesen, wenn die folgenden geometrischen Kriterien erfüllt werden (siehe Fig. 3)

Für jeden Lagerzapfen bilden die Stege 5 mindestens 30 Prozent der Oberfläche des Lagerzapfens 3

Jeder Steg weist eine Breite B1 von 3 mm bis 15 mm auf.

Jede Nut weist eine Breite B2 von 3 mm bis 20 mm auf.

Jede Nut weist eine Tiefe T von mindestens fünfzig Mikrometer und besonders bevorzugt eine Tiefe von 100 µm bis 200 µm auf.

Es versteht sich, dass die Nuten 4 und/oder die Stege 5 äquidistant angeordnet sein können, aber nicht müssen. Auch ist es keinesfalls notwendig - aber möglich -, dass alle Nuten 4 bzw. alle Stege 5 die gleiche Breite B1,B2 oder die gleiche Tiefe T aufweisen.

Je nach Anwendungsfall kann es vorteilhaft sein, auch den Rollenkörper 3 in sinngemäss gleicher Weise wie die Lagerzapfen 3 mit Umfangsnuten zu versehen, die mit einer Schutzschicht in einem thermischen Spritzprozess aufgefüllt werden.

## Patentansprüche

1. Tauchbadrolle für ein Tauchbad mit flüssigem Metall mit einem Rollenkörper (2), der sich entlang einer Längsachse (A) erstreckt, sowie mit im Wesentlichen zylindrischen Lagerzapfen (3) zum Zusammenwirken mit Lagerbuchsen zwecks Lagerung der Tauchbadrolle (1,1a,1b), **dadurch gekennzeichnet, dass** jeder Lagerzapfen (3) mindestens eine Nut (4) aufweist, die sich in Umfangsrichtung über den gesamten Umfang des Lagerzapfens (3) erstreckt, und die mittels einer durch thermisches Spritzen erzeugten Schutzschicht (41) aufgefüllt ist.

2. Tauchbadrolle nach Anspruch 1, wobei die Schutzschicht (41) Molybdän, Molybdänkarbid oder ein Gemisch aus Molybdän und Molybdänkarbid enthält.

3. Tauchbadrolle nach einem der vorangehenden Ansprüche, wobei der Molybdängehalt oder der Molybdänkarbidgehalt oder der Gehalt an dem Gemisch aus Molybdän und Molybdänkarbid der Schutzschicht (41) mindestens 40 Gewichtsprozent beträgt.

4. Tauchbadrolle nach einem der vorangehenden Ansprüche, wobei an jedem Lagerzapfen (3) mehrere Nuten (4) vorgesehen sind, wobei benachbarte Nuten (4) jeweils durch einen Steg (5) getrennt sind.

5. Tauchbadrolle nach Anspruch 4, wobei für jeden Lagerzapfen (3) die Stege (5) mindestens 30 Prozent der Oberfläche des Lagerzapfens (3) bilden.

6. Tauchbadrolle nach einem der Ansprüche 4 oder 5 wobei jeder Steg (5) eine Breite (B1) von 3 mm bis 15 mm aufweist.

7. Tauchbadrolle nach einem der vorangehenden Ansprüche, wobei jede Nut (4) eine Breite (B2) von 3 mm bis 20 mm aufweist.

8. Tauchbadrolle nach einem der vorangehenden Ansprüche, wobei jede Nut (4) eine Tiefe (T) von mindestens fünfzig Mikrometer aufweist.

9. Tauchbadrolle nach einem der vorangehenden Ansprüche, wobei jede Nut (4) eine Tiefe (T) von 100 bis 200 Mikrometer aufweist.

10. Tauchbadrolle nach einem der vorangehenden Ansprüche, wobei die Schutzschicht (41) zusätzlich auf den Stegen (5) vorgesehen ist, wobei die Schutzschicht (41) auf der Oberfläche der Stege (5) eine Dicke von mindestens zwanzig Mikrometer und vorzugsweise von 50 bis 100 Mikrometer aufweist.

11. Verfahren zur Herstellung einer Tauchbadrolle für ein Tauchbad mit flüssigem Metall mit einem Rollenkörper (2), der sich entlang einer Längsachse (A) erstreckt, sowie mit im Wesentlichen zylindrischen Lagerzapfen (3) zum Zusammenwirken mit Lagerbuchsen, **dadurch gekennzeichnet, dass** in jedem Lagerzapfen (3) zumindest eine Nut (4) vorgesehen wird, die sich in Umfangsrichtung über den gesamten Umfang des Lagerzapfens (3) erstreckt, wobei die Nut (4) mittels einer durch thermisches Spritzen erzeugten Schutzschicht (41) aufgefüllt wird.

12. Verfahren nach Anspruch 10, wobei die Nut (3) mit einem molybdänhaltigen oder mirt einem molybdänkarbidhaltigen Material aufgefüllt wird.

13. Verfahren nach einem der Ansprüche 10 oder 11,wobei die Nut (3) mittels Plasmaspritzen, Flammspritzen oder Lichtbogenspritzen aufgefüllt wird.

## Claims

1. An immersion bath roll for an immersion bath with liquid metal with a roll body (2) extending along a longitudinal axis (A), as well as essentially cylindrical bearing journals (3) for the cooperation with bearing sleeves for the mounting of the immersion bath roll (1, 1a, 1b), **characterized in that** each bearing journal (3) has at least one groove (4), which extends in the circumferential direction over the total circumference of the bearing journal (3) and which is filled up with a protective layer (41) produced by thermal spraying.

2. An immersion bath roll in accordance with claim 1, wherein the protective layer (41) contains molybdenum, molybdenum carbide or a mixture of molybdenum and molybdenum carbide.

3. An immersion bath roll in accordance with any one of the preceding claims, wherein the molybdenum content or the molybdenum carbide content or the content of the mixture of molybdenum and molybdenum carbide of the protective layer (41) is at least 40 percent per weight.

4. An immersion bath roll in accordance with any one of the preceding claims, wherein a plurality of grooves (4) is provided on each bearing journal (3), wherein neighbouring grooves (4) are separated by a web (5).

5. An immersion bath roll in accordance with claim 4, wherein for each bearing journal (3) the webs (5) form at least 30 % of the surface area of the bearing journal (3).

6. An immersion bath roll in accordance with one of the claims 4 or 5, wherein each web (5) has a width (B1) of 3 mm to 15 mm.

7. An immersion bath roll in accordance with any one of the preceding claims, wherein each groove (4) has a width (B2) of 3 mm to 20 mm.

8. An immersion bath roll in accordance with any one of the preceding claims, wherein each groove (4) has a depth (T) of at least 50 micrometers.

9. An immersion bath roll in accordance with any one of the preceding claims, wherein each groove (4) has a depth (T) of 100 to 200 micrometers.

10. An immersion bath roll in accordance with any one of the preceding claims, wherein the protective layer (41) is additionally provided on the webs (5), wherein the protective layer (41) on the surface of the webs (5) has a thickness of at least twenty micrometers and preferentially of 50 to 100 micrometers.

11. A method for the manufacture an immersion bath roll for an immersion bath of liquid metal with a roll body (2), which extends along the longitudinal axis (A), as well as essentially cylindrical bearing journals (3) for cooperation with bearing sleeves, **characterized in that** at least one groove (4) is provided on every bearing journal (3), and extends in the circumferential direction over the total circumference of the bearing journal (3), wherein the groove (4) is filled with a protective layer (41) applied via by thermal spraying.

12. A method in accordance with claim 10, wherein the groove (4) is filled with a material containing molybdenum or a material containing molybdenum carbide.

13. A method in accordance with any of the claims 10 or 11, wherein the groove (4), is filled either by plasma spraying, or flame spraying or arc spraying.

## Revendications

1. Rouleau de bain submersible pour un bain d'immersion avec du métal liquide avec un corps de rouleau (2), qui s'étend le long d'un axe longitudinal (A), et avec des tourillons (3) sensiblement cylindriques pour la coopération avec des douilles de palier afin de loger le rouleau de bain submersible (1, 1a, 1b), **caractérisé en ce que** chaque tourillon (3) présente au moins une rainure (4) qui s'étend dans la direction périphérique sur tout le pourtour du tourillon (3) et qui est remplie au moyen d'une couche de protection (41) produite par projection thermique.

2. Rouleau de bain submersible selon la revendication 1, où la couche de protection (41) contient du molybdène, du carbure de molybdène ou un mélange de molybdène et de carbure de molybdène.

3. Rouleau de bain submersible selon l'une des revendications précédentes, où la teneur en molybdène ou bien la teneur en carbure de molybdène ou bien la teneur en mélange de molybdène et de carbure de molybdène de la couche de protection (41) représente au moins 40% en poids.

4. Rouleau de bain submersible selon l'une des revendications précédentes, où sont prévues à chaque tourillon (3) plusieurs rainures (4), des rainures avoisinantes (4) étant séparées à chaque fois par une nervure (5).

5. Rouleau de bain submersible selon la revendication 4, où pour chaque tourillon (3), les nervures (5) représentent au moins 30% de la surface du tourillon (3).

6. Rouleau de bain submersible selon l'une des revendications 4 ou 5, où chaque nervure (5) a une largeur (B1) de 3 mm à 15 mm.

7. Rouleau de bain submersible selon l'une des revendications précédentes, où chaque rainure (4) présente une largeur (B2) de 3 mm à 20 mm.

8. Rouleau de bain submersible selon l'une des revendications précédentes, où chaque rainure (4) présente une profondeur (T) d'au moins 50 micromètres.

9. Rouleau de bain submersible selon l'une des revendications précédentes, où chaque rainure (4) présente une profondeur (T) de 100 à 200 micromètres.

10. Rouleau de bain submersible selon l'une des revendications précédentes, où la couche de protection (41) est prévue en plus sur les nervures (5), la couche de protection (41) sur la surface des nervures (5) ayant une épaisseur d'au moins 20 micromètres et de préférence de 50 à 100 micromètres.

11. Procédé de fabrication d'un rouleau de bain submersible pour un bain d'immersion avec du métal liquide avec un corps de rouleau (2), qui s'étend le long d'un axe longitudinal (A), et avec des tourillons (3) sensiblement cylindriques pour la coopération avec des douilles de palier, **caractérisé en ce qu'**il est prévu dans chaque tourillon (3) au moins une rainure (4), qui s'étend dans la direction périphérique sur tout le pourtour du tourillon (3), la rainure (4) étant remplie au moyen d'une couche de protection (41) produite par projection thermique.

12. Procédé selon la revendication 10, où la rainure (3) est remplie avec un matériau contenant du molybdène ou contenant du carbure de molybdène.

13. Procédé selon l'une des revendications 10 ou 11, où la rainure (3) est remplie par pulvérisation par plasma, projection à la flamme ou projection à l'arc électrique.
